(19) Europäisches Patentamt
European Patent Office
Office européen des brevets

(11) **EP 2 338 248 B1**

(12) **EUROPÄISCHE PATENTSCHRIFT**

(45) Veröffentlichungstag und Bekanntmachung des Hinweises auf die Patenterteilung:
**06.05.2020 Patentblatt 2020/19**

(21) Anmeldenummer: **09779116.4**

(22) Anmeldetag: **06.03.2009**

(51) Int Cl.:
**H04L 1/20** *(2006.01)*

(86) Internationale Anmeldenummer:
**PCT/EP2009/052656**

(87) Internationale Veröffentlichungsnummer:
**WO 2010/031599 (25.03.2010 Gazette 2010/12)**

(54) **VERFAHREN ZUM BETREIBEN EINES KOMMUNIKATIONSSYSTEMS MIT MEHREREN KNOTEN UND KOMMUNIKATIONSSYSTEM DAFÜR**

METHOD FOR OPERATING A COMMUNICATION SYSTEM WITH A PLURALITY OF NODES AND COMMUNICATION SYSTEM THEREFOR

PROCÉDÉ POUR EXPLOITER UN SYSTÈME DE COMMUNICATION À PLUSIEURS N UDS ET SYSTÈME DE COMMUNICATION ASSOCIÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **17.09.2008 DE 102008042172**

(43) Veröffentlichungstag der Anmeldung:
**29.06.2011 Patentblatt 2011/26**

(73) Patentinhaber: **Robert Bosch GmbH**
**70442 Stuttgart (DE)**

(72) Erfinder:
• **Werner, Michael**
 **51069 Koeln (DE)**
• **Mueller, Bernd**
 **71229 Leonberg (DE)**
• **Gebauer, Carsten**
 **71034 Boeblingen (DE)**
• **Spraul, Manfred**
 **70191 Stuttgart (DE)**

(56) Entgegenhaltungen:
**EP-A1- 1 227 603    WO-A-03/067804**
**US-A1- 2002 083 378**

**Beschreibung**

Stand der Technik

Die Erfindung betrifft ein Verfahren zum Betreiben eines Kommunikationssystems mit mehreren Knoten, die auf einen gemeinsamen Kanal des Kommunikationssystems Zugriff haben, wobei bei dem Verfahren ein Übertragungsvorgang zum Übertragen einer Nachricht über den Kanal auf Bitfehler überwacht wird, wobei bei Auftreten eines Bitfehlers eine Signalisierungsnachricht zum Signalisieren des Bitfehlers über den Kanal übertragen wird.

Im ISO-Standard 11898-1, "Road vehicles - Controller Area Network (CAN) - Part 1: Data link layer and physical signalling" ist die Sicherungsschicht des Controller Area Network (CAN) sowie die Signalisierung in der Bitübertragungsschicht des CAN spezifiziert. Dieser Standard spezifiziert als Fehlerrahmen (error frame) bezeichnete Signalisierungsnachrichten zum Signalisieren eines Bitfehlers, der bei einer Datenübertragung aufgetreten ist. In dem Standard ist ferner spezifiziert, dass Knoten die einzelnen auftretenden Fehlerrahmen erfassen und in Abhängigkeit von den erfassten Fehlerrahmen zwischen verschiedenen Zuständen wechseln.

Die internationale Offenlegungsschrift WO 03/067804 A offenbart ein Verfahren und eine Vorrichtung für ein Bussystem, bei denen an Hand detektierter Bitfehler eine Roh-Bitfehlerhäufigkeit ermittelt wird und aus dieser eine Wahrscheinlichkeit für nicht detektierte Fehler errechnet wird.

Die US-Offenlegungsschrift US 2002/0083378 A1 offenbart ein Bussystem, bei dem bei Überschreiten eines Schwellwertes von festgestellten Übertragungsfehlern die Teilnehmer in einen "Bus-off" Zustand wechseln und keine weiteren Nachrichten senden.

Nachteilig an den bekannten Protokollen des CAN ist, dass mit ihnen eine von einer momentanen Bitfehlerhäufigkeit des Kanals abhängige adaptive Kommunikationssteuerung nicht hinreichend genau möglich ist. Folglich muss eine CAN-Domäne unter Heranziehen einer geschätzten Bitfehlerhäufigkeit des Kanals geplant werden.

Offenbarung der Erfindung

Aufgabe der Erfindung ist es, ein einfach realisierbares Verfahren zum Betreiben eines Kommunikationssystems mit mehreren über einen gemeinsamen Kanal miteinander verbundenen Knoten anzugeben, das eine Steuerung von Kommunikationsvorgängen zwischen den Knoten in Abhängigkeit von einer momentanen Bitfehlerhäufigkeit des Kanals ermöglicht.

Zur Lösung der Aufgabe wird ein Verfahren mit den Merkmalen des Anspruchs 1 vorgeschlagen.

Erfindungsgemäß wurde erkannt, dass durch Auswerten der Signalisierungsnachrichten auf einfache Weise eine momentane Bitfehlerhäufigkeit des Kanals geschätzt werden kann, ohne dass hierfür eine Erweiterung von Protokollen des Kommunikationssystems erforderlich wäre. Das Verfahren lässt sich somit einfach realisieren, wobei ein mit dem erfindungsgemäßen Verfahren betriebenes Kommunikationssystem mit herkömmlichen Kommunikationssystemen kompatibel bleibt. Zudem benötigt das Verfahren keine zusätzlichen Nachrichten, die über den Kanal übertragen werden müssen. Beim Ausführen des Verfahrens wird der Kanal somit nicht zusätzlich belastet. Des Weiteren handelt es sich um ein digitales Verfahren, für das keine Schätzungen analoger Größen, wie beispielsweise eines Signal-zu-Rausch-Verhältnisses, benötigt werden. Das Verfahren eignet sich besonders gut, die momentane Bitfehlerhäufigkeit in schnellen Kommunikationssystemen (z.B. auf dem Gebiet der Telekommunikation) zu ermitteln. Das Verfahren wird insbesondere in Kommunikationssystemen eingesetzt, in denen alle Kommunikationsteilnehmer Reaktionen auf Bitfehler in dem Bitstrom beobachten können. Es wird eine Statistik über die beobachteten Reaktionen geführt, um daraus dann die momentane Bitfehlerhäufigkeit zu ermitteln. Die Übertragung der Nachrichten über das Kommunikationssystem erfolgt vorzugsweise in Datenrahmen. Die momentane Bitfehlerhäufigkeit kann in einem oder mehreren, vorzugsweise in allen Kommunikationsteilnehmern des Kommunikationssystems ermittelt werden.

Es ist besonders bevorzugt, dass die Bitfehlerhäufigkeit in Abhängigkeit von einer Kanalbelegung des Kanals und einer Kapazität des Kanals ermittelt wird. Auf diese Weise wird eine Abhängigkeit der Signalisierrate von einer Nutzdatenrate berücksichtigt. Als Kanalbelegung kann hierbei auch ein vorgegebener Wert herangezogen werden. Beispielsweise kann von einer vollen Belegung des Kanals ausgegangen werden.

Ein unerwünschter Einfluss der Kanalbelegung auf einen Wert der geschätzten Bitfehlerhäufigkeit kann vergleichsweise wirkungsvoll dadurch eliminiert werden, dass die Kanalbelegung durch Messen einer Nachrichtenrate von über den Kanal übertragenen Nachrichten, vorzugsweise von fehlerfrei übertragenen Nachrichten, ermittelt wird. Hierbei kann außerdem eine Länge der einzelnen übertragenen Nachrichten erfasst werden oder eine durchschnittliche oder im voraus bekannten Nachrichtenlänge dem Ermitteln der Kanalbelegung zugrunde gelegt werden. Hierdurch wird erreicht, dass der Wert der Bitfehlerhäufigkeit weitgehend unabhängig von der momentanen Kanalbelegung ermittelt wird, das heißt, dass Schwankungen der Kanalbelegung den Wert der ermittelten Bitfehlerhäufigkeit höchstens geringfügig verfälschen. Die vorgeschlagene Beschränkung des Messens der Nachrichtenrate auf fehlerfrei übertragene Nachrichten vereinfacht das Verfahren, ohne dass hierdurch die Genauigkeit dieses Messens und damit die Genauigkeit der ermittelten Bitfehlerhäufigkeit merklich verschlechtert wird.

Es ist zudem denkbar, dass bei der Ermittlung der Kanalbelegung nur ein Teil der über den Kanal übertragenen Nachrichten berücksichtigt wird. Beispielsweise kann nur ein Nutzdatenteil oder nur ein Nachrichtenkopf, insbesondere nur ein Arbitrierungsteil, der Nachricht berücksichtigt werden.

Gemäß einer bevorzugten Ausführungsform der Erfindung ist vorgesehen, dass als Bitfehlerhäufigkeit eine mittlere Bitfehlerhäufigkeit aller Übertragungsvorgänge ermittelt wird. Hierdurch lässt sich das Verfahren mit geringem Aufwand realisieren, da nur ein Wert für die Bitfehlerhäufigkeit vorgehalten werden muss und somit relativ wenig Speicher für die Ausführung des Verfahrens benötigt wird.

Alternativ oder ergänzend hierzu kann vorgesehen werden, dass als Bitfehlerhäufigkeit die Bitfehlerhäufigkeit derjenigen Übertragungsvorgänge ermittelt wird, bei denen die Nachricht von einem bestimmten Knoten gesendet wird. Hierbei können mehrere Werte für die Bitfehlerhäufigkeit und/oder weitere statistische Größen vorgehalten werden, die verschiedenen bestimmten Knoten zugeordnet werden. Vorzugsweise wird die Bitfehlerhäufigkeit für jeden Knoten des Kommunikationssystems ermittelt. Obwohl jeder an das Kommunikationssystem angeschlossene Knoten die Bitfehlerhäufigkeit des von dem bestimmten Knoten gesendeten Übertragungen ermitteln kann, indem er diese Übertragungen abhört, ist bevorzugt, dass der bestimmte Knoten die Bitfehlerhäufigkeit der von ihm selbst gesendeten Übertragungen ermittelt. Insgesamt wird dadurch, dass die Bitfehlerhäufigkeit für den bestimmten Knoten ermittelt wird, eine genauere Information über die Kommunikationsbedingungen dieses Knotens bereitgestellt.

Es hat sich als vorteilhaft erwiesen, die Bitfehlerhäufigkeit des Kanals für ein bestimmtes Zeitintervall zu bestimmen. Es ist somit bevorzugt, dass ein Zeitintervall, vorzugsweise durch einen Startbefehl zum Starten des Intervalls und ein Stoppbefehl zum Beenden des Intervalls, vorgegeben wird, für das die Bitfehlerhäufigkeit ermittelt wird.

Es ist besonders bevorzugt, dass ein Kommunikationsverhalten zumindest eines Knotens in Abhängigkeit von der ermittelten Bitfehlerhäufigkeit adaptiert wird. Auf diese Weise kann das Kommunikationssystem an die sich mit der Zeit ändernde Bitfehlerhäufigkeit dynamisch angepasst werden. Ist die Bitfehlerhäufigkeit zu einem bestimmten Zeitpunkt relativ hoch, dann können ein oder mehrere Knoten für ihre Übertragungen ein Format von Nutzdatenblöcken wählen, bei dem ein Anteil an Prüfbits an dem gesamten Nutzdatenblock relativ groß ist, so dass trotz der hohen Bitfehlerhäufigkeit eine relativ geringe Restfehlerwahrscheinlichkeit bei der Übertragung erreicht wird. Generell kann in Abhängigkeit von der ermittelten Bitfehlerhäufigkeit ein Zeitpunkt und der Inhalt einer einzelnen Übertragung angepasst werden. Beispielsweise können bei einer hohen Bitfehlerhäufigkeit relativ unwichtige oder nicht zeitkritische Übertragungen zurückgestellt werden, so dass eine Überlastung des Kommunikationssystems aufgrund einer durch die hohe Bitfehlerhäufigkeit verminderte Nutzdatenrate des Kanals vermieden wird. Es kann auch vorgesehen werden, dass Übertragungen, die nicht auf eine erhöhte Bitfehlerhäufigkeit angepasst werden können, wie sie beispielsweise bei Anwendungen mit einer geringen Fehlertoleranzzeit auftreten, vermieden werden, solange die Bitfehlerhäufigkeit relativ hoch ist. Folglich muss das Kommunikationssystem nicht mehr statisch unter einer angenommenen, relativ konservativ geschätzten Bitfehlerhäufigkeit ausgelegt werden, wodurch der Nutzdurchsatz des Kommunikationssystems erhöht wird, da aufwendige Absicherungsmaßnahmen gegen die Bitfehler lediglich für den Fall, dass die Bitfehlerhäufigkeit hoch ist, angewendet werden müssen.

Bei dem Kommunikationssystem kann es sich um ein Bussystem, vorzugsweise um ein in der Kraftfahrzeugtechnik verwendetes Bussystem, wie beispielsweise eine CAN-Domäne, handeln.

Als eine weitere Lösung der Aufgabe wird ein Kommunikationssystem mit den Merkmalen des Anspruchs 9 vorgeschlagen. Bei einem solchen Kommunikationssystem werden die Vorteile des erfindungsgemäßen Verfahrens realisiert.

Hierbei ist besonders bevorzugt, dass das Kommunikationssystem, insbesondere die Überwachungsmittel und die Signalisiermittel, zum Ausführen eines oben beschriebenen erfindungsgemäßen Verfahrens eingerichtet ist.

Weiter ist bevorzugt, dass mindestens ein Knoten, vorzugsweise mehrere oder alle Knoten, die Messeinrichtung umfasst. Es können also mehrere Messeinrichtungen vorgesehen werden, die verschiedenen Knoten zugeordnet sind oder in diesen angeordnet sind. Die Bitfehlerrate kann somit von mehreren oder allen Knoten des Kommunikationssystems ermittelt werden. Hierdurch ergibt sich ein Kommunikationssystem bei dem die Bitfehlerhäufigkeit in mehreren Stellen des Systems und somit fehlertolerant bestimmt wird.

Hierbei ist es denkbar, dass die Messeinrichtung in einen Kommunikationscontroller des Knotens integriert ist. Beispielsweise können - falls es sich bei dem Kommunikationssystem um eine CAN-Domäne handelt - als Kommunikationscontroller ein CAN-Controller vorgesehen werden, der um die Messeinrichtung erweitert ist. Eine ohnehin notwendige Einrichtung des Kommunikationscontrollers zum Erkennen der Signalisierungsnachricht in Form des von den Protokollen des CAN vorgesehenen Fehlerrahmens kann von der Messeinrichtung mitbenutzt werden.

Es kann auch vorgesehen werden, dass die Messeinrichtung als ein separates Bauteil, vorzugsweise als ein ASIC, ausgebildet ist. Hierdurch wird erreicht, dass in dem erfindungsgemäßen Kommunikationssystem herkömmliche Bauteile, wie beispielsweise herkömmliche Kommunikationscontroller, verwendet werden können.

Weitere Merkmale und Vorteile der Erfindung ergeben sich aus der nachfolgenden Beschreibung, in welcher exemplarische Ausführungsformen anhand der Zeichnungen näher erläutert werden. Dabei zeigen:

Figur 1 eine schematische Darstellung eines Kommunikationssystems gemäß einer bevorzugten Ausführungsform der vorliegenden Erfindung;

Figur 2 eine schematische Darstellung eines Knotens des Kommunikationssystems aus Figur 1;

Figur 3 eine schematische Darstellung eines Knotens gemäß einer zweiten bevorzugten Ausführungsform;

Figur 4 ein Flussdiagramm eines Verfahrens zum Betreiben des Kommunikationssystems aus Figur 1; und

Figur 5 ein Detail aus dem Flussdiagramm von Figur 4.

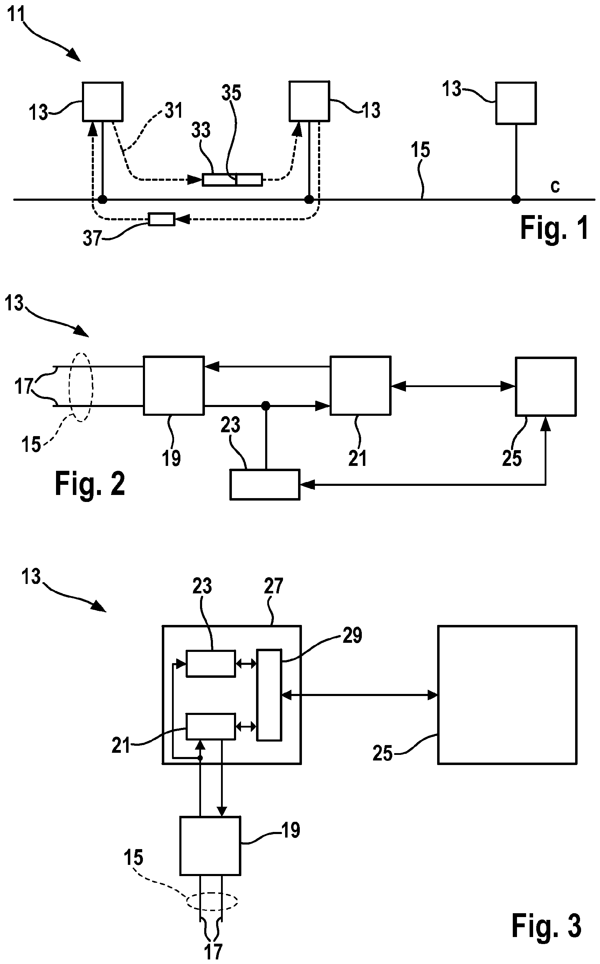

Figur 1 zeigt ein Kommunikationssystem 11, das mehrere Knoten 13 aufweist, die an eine gemeinsame Busleitung 15 angeschlossen sind. Bei dem Kommunikationssystem 11 handelt es sich um eine CAN-Domäne, wobei die Busleitung 15 einen gemeinsamen Kanal des Kommunikationssystems 11 bildet, auf den alle Knoten 13 Zugriff haben. Eine Kanalkapazität c der Busleitung 15 beträgt in der gezeigten Ausführungsform c = 500 kbit/s.

In Figur 2 ist ein möglicher Aufbau des Knotens 13 dargestellt. Man erkennt, dass die Busleitung 15, wie beim CAN üblich, ein Adernpaar 17 zur Datenübertragung zwischen den Knoten 13 umfasst. Das Adernpaar 17 der Busleitung 15 ist an einen CAN-Transceiver 19 des Knotens 13 angeschlossen. Ein Ausgang des CAN-Transceivers 19 ist mit einem Eingang eines CAN-Controllers 21 des Knotens 13 verbunden. Ein Ausgang des CAN-Controllers 21 ist mit einem Eingang des CAN-Transceivers 19 verbunden.

Des Weiteren weist der Knoten 13 eine Messeinrichtung 23 zum Ermitteln einer Bitfehlerhäufigkeit auf. Ein Eingang der Messeinrichtung 23 ist ebenfalls mit dem Ausgang des CAN-Transceivers 19 verbunden.

Schließlich umfasst der Knoten 13 einen als ein Mikrocontroller 25 ausgebildeten Mikrocomputer auf, an den der CAN-Controller 21 und die Messeinrichtung 23 angebunden sind.

Die Messeinrichtung 23 ist in der in Figur 2 gezeigten Ausführungsform als ein gesondertes Bauteil in Form eines ASICs ausgebildet. Abweichend hiervon kann die Messeinrichtung 23 auch als ein programmierbarer Logikbaustein (PLD), der entsprechend programmiert ist, ausgebildet sein.

Figur 3 zeigt ein weiteres Beispiel eines Knotens 13, bei welchem der CAN-Controller 21 und die Messeinrichtung 23 in einem einzigen Peripheriebaustein 27 integriert sind. Die Verschaltung der einzelnen Baugruppen 19, 21 und 23 des Knotens 13 untereinander entspricht der oben angegebenen Verschaltung der Bauteile 19, 21 und 23 des in der Figur 2 gezeigten Knotens 13. Allerdings sind der CAN-Controller 21 und die Messeinrichtung 23 nicht getrennt voneinander, sondern über eine Schnittstellenlogik 29 an den Mikrocontroller 25 angebunden. Der Peripheriebaustein 27 kann als integrierte Schaltung, beispielsweise als ein ASIC oder als ein entsprechendes programmierter PLD realisiert sein.

Beim Betrieb des Kommunikationssystems 11 übertragen die einzelnen Knoten 13 gemäß den Protokollen des CAN Nachrichten in Form von Datenrahmen 33 über die Busleitung 15. Ein solcher Datenrahmen 33 umfasst einen Nachrichtenkopf mit einem Arbitrierungsteil und kann ein Nutzdatenfeld zum Übertragen von Nutzdaten aufweisen. Ein entsprechender Übertragungsvorgang 31 ist in der Figur 1 schematisch als ein gestrichelter Pfeil dargestellt, wobei ein übertragener Datenrahmen 33 - ebenfalls schematisch - als ein Rechteck 33 eingezeichnet ist. Der Aufbau des Datenrahmens 33, entspricht den Vorgaben der allgemein bekannten und standardisierten Protokolle des CAN. Der in Figur 1 angezeichnete Datenrahmen 33 weist einen Bitfehler 35 auf. Sobald einer der Knoten 13 den Bitfehler 35 erkennt, sendet er eine Signalisierungsnachricht in Form eines Fehlerrahmens 37 (error frame 37), um den Bitfehler 35 über die Busleitung 15 sämtlichen Knoten 13 anzuzeigen.

Innerhalb der Knoten 13 stellt der Mikrocontroller 25 für den CAN-Controller 21 einen zu übertragenden Nutzdatenblock bereit, und der CAN-Controller 21 verpackt den Nutzdatenblock in einen geeigneten Datenrahmen 33 und überträgt diesen zum CAN-Transceiver 19, der den Datenrahmen 33 dann über das Adernpaar 17 der Busleitung 15 ausgibt. Zum Empfangen von Daten über die Busleitung 15 wertet der CAN-Transceiver 19 Signale am Adernpaar 17 der Busleitung 15 aus und erzeugt an seinem Ausgang ein einem empfangenen Datenrahmen 33 beziehungsweise einem empfangenen Fehlerrahmen 37 entsprechendes Signal und stellt dieses dem CAN-Controller 21 und der Messeinrichtung 23 zur Verfügung. Der CAN-Controller 21 führt Datenverarbeitungsschritte gemäß den Protokollen des CAN durch und stellt den über den Datenrahmen 33 übertragenen Nutzdatenblock dem Mikrocontroller 25 zur Verfügung. Auf dem Mikrocontroller 25 ablaufende Anwendungsprogramme können im Nutzdatenblock enthaltene Nutzdaten weiterverarbeiten und gegebenenfalls an andere Knoten 13 zu übertragende Nutzdaten in Form eines weiteren Nutzdatenblocks an den CAN-Controller 21 übertragen.

Da die Messeinrichtung 23 an den Ausgang des CAN-Transceivers 19 angeschlossen ist, werden der Messeinrichtung 23 sämtliche über die Busleitung 15 übertragenen Datenrahmen 33 und Fehlerrahmen 37 übermittelt. Durch Auszählen der an die Messeinrichtung 23 übermittelten Fehlerrahmen 37 berechnet die Messeinrichtung 23 eine Bitfehlerhäufigkeit des durch die Busleitung 15 bereitgestellten Kanals. Die berechnete Bitfehlerhäufigkeit wird vom Mikrocontroller 25 aus der Messeinrichtung 23 ausgelesen, so dass ein Kommunikationsverhalten von vom Mikrocontroller 25 ausgeführten Anwendungsprogrammen angepasst werden kann.

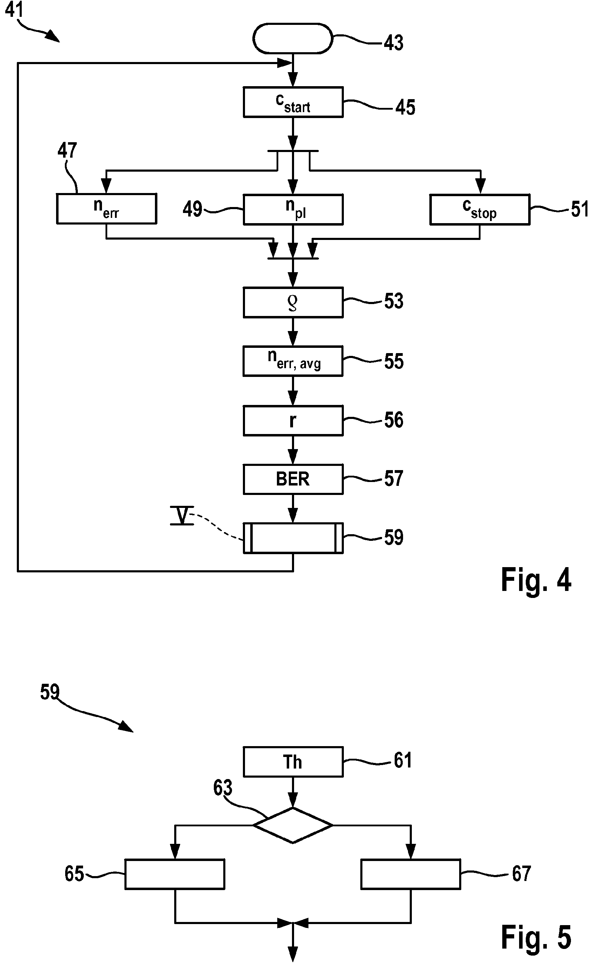

Im Folgenden wird ein Verfahren 41 zum Betreiben des Kommunikationssystems 11, insbesondere zum Ermitteln der Bitfehlerhäufigkeit sowie zum Anpassen des Kommunikationsverhaltes anhand der Figuren 4 und 5 näher erläutert. Nach einem Start 43 des Verfahrens 41 wird ein Warteschritt 45 ausgeführt, bei dem auf einen Startbefehl $c_{start}$, der von dem Mikrocontroller 25 generiert wird, gewartet wird.

Sobald die Messeinrichtung 23 den Startbefehl $c_{start}$ erhalten hat, werden ein erster Messvorgang 47, ein zweiter Messvorgang 49 sowie ein Wartevorgang 51 gleichzeitig ausgeführt. Im ersten Messvorgang 47 ermittelt die Messeinrichtung 23 eine Anzahl $n_{err}$ der Fehlerrahmen 37, welche sie über ihren Eingang während eines Messintervalls t empfangen hat. Im zweiten Messvorgang 49 ermittelt die Messeinrichtung 23 eine Anzahl $n_{pl}$ der von ihr während des Messintervalls t bitfehlerfrei empfangenen Datenrahmen 33. Hierbei kann im zweiten Messvorgang 49 auch eine mittlere Länge der Datenrahmen 33 oder die einzelnen Längen der empfangenen Datenrahmen 33 ermittelt werden. Im Wartevorgang 51 wartet die Messeinrichtung 23 darauf, dass der Mikrocontroller 25 einen Stoppbefehl $c_{stop}$ zu der Messeinrichtung 23 überträgt. Sobald die Messeinrichtung 23 den Stoppbefehl $c_{stop}$ empfangen hat, beendet sie die Vorgänge 47, 49, 51 und beginnt mit der Abarbeitung eines Schritts 53.

Eine Dauer des Messintervalls t, für das die beiden Messvorgänge 47, 49 ausgeführt werden, wird also durch einen zeitlichen Abstand zwischen dem Startbefehl $c_{start}$ und dem Stoppbefehl $c_{stop}$ bestimmt. In einer nicht gezeigten Ausführungsform ist die Dauer des Messintervalls t fest vorgegeben, das heißt im Vorgang 51 wird eine vorbestimmte Zeitdauer lange gewartet, bis die Vorgänge 47, 49 und 51 beendet werden. In diesem Fall kann auch der Warteschritt 45 entfallen, so dass die Vorgänge 47, 49, 51 regelmäßig für die vorgegebene Zeitdauer wiederholt ausgeführt werden, ohne dass der Mikrocontroller 25 hierfür die Befehle $c_{start}$ bzw. $c_{stop}$ an die Messeinrichtung 23 senden muss.

Im Schritt 53 wird in Abhängigkeit von der ermittelten Anzahl $n_{pl}$ der Datenrahmen 33, die erfolgreich, das heißt ohne Bitfehler 35, übertragen wurden, eine Busbelegung p ermittelt. Unter der Busbelegung p ist die relative Nutzungsdauer der Busleitung 15 für Bitübertragungen, insbesondere Übertragungen von Datenrahmen 33 oder Fehlerrahmen 37, verstehen. Der Einfachheit halber werden hierbei die mit Bitfehler 35 übertragenen Datenrahmen 33 sowie die Fehlerrahmen 37 vernachlässigt. Das heißt, zum Ermitteln der Busbelegung p werden nur die fehlerfrei übertragenen Datenrahmen 33 berücksichtigt. Jedoch können die mit Bitfehler 35 übertragenen Datenrahmen 33 und die Fehlerrahmen 37 in einer anderen Ausführungsform berücksichtigt werden.

In einem auf den Schritt 53 folgenden Schritt 55 wird ein Mittelwert $n_{err,avg}$ der empfangenen Fehlerrahmen 37 gebildet. Der Mittelwert $n_{err,avg}$ wird aus mehreren Werten $n_{err}$, die in aufeinanderfolgenden ersten Messvorgängen 47 ermittelt wurden, berechnet. Hierbei kann der Mittelwert $n_{err,avg}$ als eine Konvexkombination dieser ermittelten Werte $n_{err}$ gebildet werden, so dass es sich bei dem Mittelwert $n_{err,avg}$ um einen gleitenden Mittelwert handelt. Die einzelnen Werte $n_{err}$ können hierbei beliebig gewichtet werden. Beispielsweise können für den Fall, dass zwei Werte $n_{err}$ bei der Mittelwertbildung berücksichtigt werden sollen, diese jeweils mit 1/2 gewichtet werden. Abweichend von der gleichmäßigen Gewichtung ist auch eine ungleichmäßige Gewichtung beispielsweise eine Gewichtung mit exponentiell abnehmenden Gewichtungskoeffizienten denkbar, wobei weiter zurückliegende Werte $n_{err}$ schwächer gesichtet werden, als nicht so weit zurückliegende Werte $n_{err}$. Insbesondere kann der gleitender Mittelwert $n_{err,avg}$ aus dem momentanen Wert $n_{err}$ und dem zuletzt berechneten Mittelwert $n_{err,avg,prev}$ unter Anwendung der folgenden Gleichung ermittelt werden:

$$n_{err,avg} = \alpha \cdot n_{err} + (1 - \alpha) \cdot n_{err,avg,prev}.$$

Beispielsweise kann $\alpha$ = 0,5 gewählt werden. Damit ergibt sich:

$$n_{err,avg} = \frac{1}{2}\left(n_{err} + n_{err,avg,prev}\right).$$

Nach dem Schritt 55 wird ein Schritt 56 ausgeführt, bei dem unter Berücksichtigung der Dauer des Messintervalls t eine Signalisierrate r, das heißt die mittlere Anzahl $n_{err,avg}$ der Fehlerrahmen 37 bezogen auf die Dauer t des Messintervalls berechnet wird.

Anschließend wird in einem Schritt 57 die Bitfehlerhäufigkeit BER in Abhängigkeit von der mittleren Anzahl $n_{err,avg}$ der Fehlerrahmen 37, der Kanalbelegung p sowie der Kanalkapazität c der Busleitung 15 berechnet. Die Signalisierrate r entspricht einer Bitfehlerrate (Bitfehler pro Zeiteinheit) der Busleitung 15. Die Bitfehlerhäufigkeit BER kann somit beispielsweise mittels der Formel

$$BER = \frac{r}{\rho \cdot c}$$

berechnet werden. Selbstverständlich kann als Bitfehlerrate auch die Signalisierrate r pro übertragenen Datenpaketen ermittelt werden.

In einer nicht gezeigten Ausführungsform wird die Kanalbelegung p nicht ermittelt sondern eine konstante, vorgegebene Kanalbelegung zum Berechnen der Bitfehlerhäufigkeit herangezogen, sodass der Schritt 53 entfallen kann. Beispielsweise ergibt sich unter der Prämisse eines vollbelegten Busses (= 1) bei einer Kanalkapazität von beispielsweise c = 500 kBit/s und einer mittleren Signalisierrate von r = 500 s$^{-1}$ unter Anwendung der obigen Formel eine Bitfehlerhäufigkeit von BER = 10$^{-3}$.

Auf den Schritt 57 folgt eine Prozedur 59, in der das Kommunikationsverhalten des Knotens 13 in Abhängigkeit von der Bitfehlerhäufigkeit BER angepasst wird. Anschließend wird das Verfahren 41 erneut ausgeführt, indem zum Schritt 45 zurückgesprungen wird. Die Anzahl der Fehlerrahmen $n_{err}$ und die Anzahl $n_{pl}$ der fehlerfrei übertragenen Datenrahmen 33 werden somit wiederholt und für verschiedene Intervalle gemessen.

In der Prozedur 59 können Systemzustände des Knotens 13 gezielt auf der Basis der Bitfehlerhäufigkeit BER verändert werden. Hierbei kann vorgesehen werden, dass ein momentaner Wert der Bitfehlerhäufigkeit BER mit Schwellwerten verglichen wird und auf der Basis dieser Vergleiche der Systemzustand des Knotens 13 beibehalten oder verändert wird. Die Vergleiche können periodisch oder als Reaktion auf einen bestimmten Anfragebefehl durchgeführt werden. Es kann auch vorgesehen werden, dass der Knoten 13 ein Notbetrieb durchführt oder sich abschaltet, wenn bzw. solange die Bitfehlerhäufigkeit BER größer als der Schwellwert ist.

In Figur 5 ist eine mögliche Realisierung der Prozedur 59 dargestellt. In einem Schritt 61 wird die Bitfehlerhäufigkeit BER mit einem Schwellwert Th verglichen. Anschließend wird in einer Verzweigung 63 in Abhängigkeit von dem Vergleichen 61 entschieden, ob der Systemzustand des Knotens 13 beibehalten werden soll (Schritt 65) oder ob in einen anderen Systemzustand gewechselt werden soll (Schritt 67).

In der gezeigten Ausführungsform werden sämtliche Schritte des Verfahrens 41 mit Ausnahme der Prozedur 59 von der Messeinrichtung 23 ausgeführt. Die Prozedur 59 läuft auf dem Mikrocontroller 25 ab. Abweichend hiervon können jedoch auch weitere Schritte des Verfahrens 41 anstelle auf der Messeinrichtung 23 vom Mikrocontroller 25 ausgeführt werden. Es ist beispielsweise denkbar, dass der Mikrocontroller 25 die Schritte 53, 55, 56 und 57, die die in den Schritten 47 und 49 erfassten Werte $n_{err}$ und $n_{pl}$ statistisch auswerten, ausführt sodass die Messeinrichtung 23 nur Daten erfassen muss, jedoch keine relativ aufwändigen Berechnungen zu deren Auswertung durchzuführen braucht.

In der gezeigten Ausführungsform wird in jedem Knoten 13 die mittlere Bitfehlerhäufigkeit über für alle Übertragungsvorgänge 31 ermittelt. Abweichend hiervon wird in einer anderen Ausführungsform in jedem Knoten 13 die Bitfehlerhäufigkeit BER lediglich für diejenigen Übertragungsvorgänge 31 ermittelt, bei denen der entsprechende Knoten 13 einen Datenrahmen 33 sendet. Generell ist das Verfahren 41 derart verteilt realisierbar, dass es auf mehreren Knoten 13 oder allen Knoten 13 des Kommunikationssystems 11 ausgeführt werden kann.

**Patentansprüche**

1. Verfahren (41) zum Betreiben eines Kommunikationssystems (11) mit mehreren Knoten (13), die auf einen gemeinsamen Kanal (15) des Kommunikationssystems (11) Zugriff haben, wobei bei dem Verfahren (41) ein Übertragungsvorgang (31) zum Übertragen einer Nachricht (33) über den Kanal (15) auf Bitfehler (35) überwacht wird, wobei bei Auftreten eines Bitfehlers (35) eine Signalisierungsnachricht (37) zum Signalisieren des Bitfehlers (35) über den Kanal (15) übertragen wird, wobei eine Signalisierrate (r) der Signalisierungsnachrichten (37) gemessen wird, **dadurch gekennzeichnet, dass** eine Bitfehlerhäufigkeit (BER) des Kanals in Abhängigkeit von der Signalisierrate (r) und einer Kanalbelegung (p) des Kanals (15) und einer Kapazität (c) des Kanals (15) ermittelt wird.

2. Verfahren (41) nach Anspruch 1, **dadurch gekennzeichnet, dass** die Kanalbelegung (p) durch Messen einer Nachrichtenrate ($n_{pl}$) von über den Kanal (15) übertragenen Nachrichten (33), vorzugsweise von fehlerfrei übertragenen Nachrichten (33), ermittelt wird.

3. Verfahren (41) nach einem der Ansprüche 1 bis 2, **dadurch gekennzeichnet, dass** als Bitfehlerhäufigkeit (BER) eine mittlere Bitfehlerhäufigkeit (BER) aller Übertragungsvorgänge (31) ermittelt wird.

4. Verfahren (41) nach einem der Ansprüche 1 bis 2, **dadurch gekennzeichnet, dass** als Bitfehlerhäufigkeit (BER) die Bitfehlerhäufigkeit (BER) derjenigen Übertragungsvorgänge (31) ermittelt wird, bei denen die Nachricht (33) von einem bestimmten Knoten (13) gesendet wird.

5. Verfahren (41) nach einem der vorhergehenden Ansprüche, **dadurch gekennzeichnet, dass** die Signalisierrate (r) der Signalisierungsnachrichten (37) und / oder die Bitfehlerhäufigkeit (BER) regelmäßig in vorgegebenen oder vorgebbaren Abständen wiederholt für ein vorgegebenes oder vorgebbares Messintervall (t) ermittelt wird.

6. Verfahren (41) nach einem der vorhergehenden Ansprüche, **dadurch gekennzeichnet, dass** die Signalisierrate (r) der Signalisierungsnachrichten (37) und / oder die Bitfehlerhäufigkeit (BER) für ein Messintervall (t) ermittelt wird, das durch einen Startbefehl ($c_{start}$) zum Starten des Intervalls und einen

Stoppbefehl ($c_{stop}$) zum Beenden des Intervalls vorgegeben wird.

**7.** Verfahren (41) nach einem der vorhergehenden Ansprüche, **dadurch gekennzeichnet, dass** ein Kommunikationsverhalten zumindest eines Knotens (13) in Abhängigkeit von einer Auswertung der gemessenen Signalisierrate (r) der Signalisierungsnachrichten (37) und / oder der ermittelten Bitfehlerhäufigkeit (BER) adaptiert wird.

**8.** Verfahren (41) nach Anspruch 7, **dadurch gekennzeichnet, dass** das Kommunikationsverhalten zumindest eines Knotens (13) abhängig von einem Vergleich der Bitfehlerhäufigkeit (BER) mit einem vorgegebenen oder vorgebbaren Schwellwert aus einer vorgegebenen oder vorgebbaren Menge von einem oder mehreren Schwellwerten adaptiert wird.

**9.** Verfahren (41) nach Anspruch 7 oder 8, **dadurch gekennzeichnet, dass** die Auswertung oder der Vergleich periodisch ausgeführt wird.

**10.** Verfahren (41) nach Anspruch 7 oder 8, **dadurch gekennzeichnet, dass** die Auswertung oder der Vergleich als Reaktion auf einen vorgegebenen oder vorgebbaren Anfragebefehl ausgeführt wird.

**11.** Verfahren (41) nach einem der vorhergehenden Ansprüche, **dadurch gekennzeichnet, dass** es sich bei dem Kommunikationssystem um ein Bussystem, vorzugsweise um eine CAN-Domäne (11) handelt.

**12.** Kommunikationssystem (11) mit mehreren Knoten (13), die auf einen gemeinsamen Kanal (15) des Kommunikationssystems (11) Zugriff haben und wobei zumindest ein Knoten (13) Mittel (21) zum Überwachen eines Übertragungsvorgangs (31) zum Übertragen einer Nachricht (33) über den Kanal (15) auf Bitfehler (35) und zum Übertragen einer Signalisiernachricht (37) zum Signalisieren eines aufgetretenen Bitfehlers (35) aufweist, wobei das Kommunikationssystem (11) mindestens eine Messeinrichtung (23) zum Messen einer Signalisierrate (r) der Signalisiernachrichten (37) umfasst, **dadurch gekennzeichnet, dass** das Kommunikationssystem (11) Mittel zum Ermitteln der Bitfehlerhäufigkeit (BER) des Kanals in Abhängigkeit von der Signalisierrate (r) und einer Kanalbelegung (p) des Kanals (15) und einer Kapazität (c) des Kanals (15) umfasst.

**13.** Kommunikationssystem (11) nach Anspruch 12, **dadurch gekennzeichnet, dass** das Kommunikationssystem (11) zum Ausführen eines Verfahren (41) nach einem der Ansprüche 1 bis 11 eingerichtet ist.

**14.** Kommunikationssystem (11) nach einem der Ansprüche 12 bis 13, **dadurch gekennzeichnet, dass** mindestens ein Knoten (13) die Messeinrichtung (23) umfasst.

**15.** Kommunikationssystem (11) nach einem der Ansprüche 12 bis 14, **dadurch gekennzeichnet, dass** die Messeinrichtung (23) in einen Kommunikationscontroller (21) des Knotens (13) integriert ist.

**16.** Kommunikationssystem (11) nach einem der Ansprüche 12 bis 15, **dadurch gekennzeichnet, dass** die Messeinrichtung (23) als ein separates Bauteil, vorzugsweise als ein ASIC, ausgebildet ist.

## Claims

**1.** Method (41) for operating a communication system (11) having multiple nodes (13) that have access to a common channel (15) of the communication system (11), wherein the method (41) involves a transmission process (31) for transmitting a message (33) via the channel (15) being monitored for bit errors (35), wherein the occurrence of a bit error (35) results in a signalling message (37) for signalling the bit error (35) being transmitted via the channel (15), wherein a signalling rate (r) of the signalling messages (37) is measured, **characterized in that** a bit error rate (BER) of the channel is ascertained on the basis of the signalling rate (r) and a channel occupancy (p) of the channel (15) and a capacity (c) of the channel (15).

**2.** Method (41) according to Claim 1, **characterized in that** the channel occupancy (p) is ascertained by measuring a message rate ($n_{pl}$) of messages (33) transmitted via the channel (15), preferably of correctly transmitted messages (33).

**3.** Method (41) according to either of Claims 1 and 2, **characterized in that** the bit error rate (BER) ascertained is a mean bit error rate (BER) for all transmission processes (31).

**4.** Method (41) according to either of Claims 1 and 2, **characterized in that** the bit error rate (BER) ascertained is the bit error rate (BER) of those transmission processes (31) that involve the message (33) being sent by a specific node (13).

**5.** Method (41) according to one of the preceding claims, **characterized in that** the signalling rate (r) of the signalling messages (37) and/or the bit error rate (BER) is repeatedly ascertained for a prescribed or prescribable measurement interval (t) regularly at prescribed or prescribable intervals.

**6.** Method (41) according to one of the preceding claims, **characterized in that** the signalling rate (r) of the signalling messages (37) and/or the bit error rate (BER) is ascertained for a measurement interval (t) that is prescribed by a start command ($c_{start}$) for starting the interval and a stop command ($c_{stop}$) for ending the interval.

7. Method (41) according to one of the preceding claims, **characterized in that** a communication behaviour of at least one node (13) is adapted on the basis of an evaluation of the measured signalling rate (r) of the signalling messages (37) and/or the ascertained bit error rate (BER).

8. Method (41) according to Claim 7, **characterized in that** the communication behaviour of at least one node (13) is adapted on the basis of a comparison of the bit error rate (BER) with a prescribed or prescribable threshold value from a prescribed or prescribable set of one or more threshold values.

9. Method (41) according to Claim 7 or 8, **characterized in that** the evaluation or the comparison is carried out periodically.

10. Method (41) according to Claim 7 or 8, **characterized in that** the evaluation or the comparison is carried out as a reaction to a prescribed or prescribable enquiry command.

11. Method (41) according to one of the preceding claims, **characterized in that** the communication system is a bus system, preferably a CAN domain (11).

12. Communication system (11) having multiple nodes (13) that have access to a common channel (15) of the communication system (11) and wherein at least one node (13) has means (21) for monitoring a transmission process (31) for transmitting a message (33) via the channel (15) for bit errors (35) and for transmitting a signalling message (37) for signalling a bit error (35) that has occurred, wherein the communication system (11) comprises at least one measuring device (23) for measuring a signalling rate (r) of the signalling messages (37), **characterized in that** the communication system (11) comprises means for ascertaining the bit error rate (BER) of the channel on the basis of the signalling rate (r) and a channel occupancy (p) of the channel (15) and a capacity (c) of the channel (15).

13. Communication system (11) according to Claim 12, **characterized in that** the communication system (11) is configured to carry out a method (41) according to one of Claims 1 to 11.

14. Communication system (11) according to either of Claims 12 and 13, **characterized in that** at least one node (13) comprises the measuring device (23).

15. Communication system (11) according to one of Claims 12 to 14, **characterized in that** the measuring device (23) is integrated in a communication controller (21) of the node (13).

16. Communication system (11) according to one of Claims 12 to 15, **characterized in that** the measuring device (23) is in the form of a separate component, preferably in the form of an ASIC.

**Revendications**

1. Procédé (41) pour faire fonctionner un système de communication (11) comprenant plusieurs nœuds (13) qui ont accès à un canal (15) commun du système de communication (11), une opération de transmission (31) destinée à transmettre un message (33) par le biais du canal (15) étant surveillée lors du procédé (41) en vue de déceler des erreurs sur les bits (35), un message de signalisation (37) destiné à signaler l'erreur sur les bits (35) étant transmis par le biais du canal (15) en cas de survenance d'une erreur sur les bits (35),
un débit de signalisation (r) des messages de signalisation (37) étant mesuré,
**caractérisé en ce qu'**une fréquence d'erreurs sur les bits (BER) du canal est déterminée en fonction du débit de signalisation (r) et d'une occupation de canal (p) du canal (15) et d'une capacité (c) du canal (15).

2. Procédé (41) selon la revendication 1, **caractérisé en ce que** l'occupation de canal (p) est déterminée en mesurant un débit de messages ($n_{pl}$) des messages (33) transmis par le biais du canal (15), de préférence de messages (33) transmis sans erreur.

3. Procédé (41) selon l'une des revendications 1 et 2, **caractérisé en ce qu'**une fréquence d'erreurs sur les bits (BER) moyenne de toutes les opérations de transmission (31) est déterminée en tant que fréquence d'erreurs sur les bits (BER).

4. Procédé (41) selon l'une des revendications 1 et 2, **caractérisé en ce que** la fréquence d'erreurs sur les bits (BER) des opérations de transmission (31) avec lesquelles le message (33) est envoyé par un nœud (13) donné est déterminée en tant que fréquence d'erreurs sur les bits (BER).

5. Procédé (41) selon l'une des revendications précédentes, **caractérisé en ce que** le débit de signalisation (r) des messages de signalisation (37) et/ou la fréquence d'erreurs sur les bits (BER) est déterminé(e) régulièrement à des écarts prédéfinis ou pouvant être prédéfinis de manière répétée pour un intervalle de mesure (t) prédéfini ou pouvant être prédéfini.

**6.** Procédé (41) selon l'une des revendications précédentes, **caractérisé en ce que** le débit de signalisation (r) des messages de signalisation (37) et/ou la fréquence d'erreurs sur les bits (BER) est déterminé (e) pour un intervalle de mesure (t) qui est prédéfini par une instruction de début ($c_{start}$) pour démarrer l'intervalle et une instruction d'arrêt ($c_{stop}$) pour mettre fin à l'intervalle.

**7.** Procédé (41) selon l'une des revendications précédentes, **caractérisé en ce qu'**un comportement de communication d'au moins un nœud (13) est adapté en fonction d'une interprétation du débit de signalisation (r) mesuré des messages de signalisation (37) et/ou de la fréquence d'erreurs sur les bits (BER) déterminée.

**8.** Procédé (41) selon la revendication 7, **caractérisé en ce que** le comportement de communication d'au moins un nœud (13) est adapté en fonction d'une comparaison de la fréquence d'erreurs sur les bits (BER) avec une valeur de seuil prédéfinie ou pouvant être prédéfinie issue d'une quantité prédéfinie ou pouvant être prédéfinie d'une ou plusieurs valeurs de seuil.

**9.** Procédé (41) selon la revendication 7 ou 8, **caractérisé en ce que** l'interprétation ou la comparaison est effectuée périodiquement.

**10.** Procédé (41) selon la revendication 7 ou 8, **caractérisé en ce que** l'interprétation ou la comparaison est effectuée en réaction à une instruction de demande prédéfinie ou pouvant être prédéfinie.

**11.** Procédé (41) selon l'une des revendications précédentes, **caractérisé en ce que** le système de communication est un système de bus, de préférence un domaine CAN (11).

**12.** Système de communication (11) comprenant plusieurs nœuds (13) qui ont accès à un canal (15) commun du système de communication (11) et au moins un nœud (13) possédant des moyens (21) pour surveiller une opération de transmission (31) destinée à transmettre un message (33) par le biais du canal (15) en vue de déceler des erreurs sur les bits (35) et pour transmettre un message de signalisation (37) destiné à signaler une erreur sur les bits (35) survenue,

le système de communication (11) comportant au moins un dispositif de mesure (23) destiné à mesurer un débit de signalisation (r) des messages de signalisation (37), **caractérisé en ce que** le système de communication (11) comporte des moyens pour déterminer une fréquence d'erreurs sur les bits (BER) du canal en fonction du débit de signalisation (r) et d'une occupation de canal (p) du canal (15) et d'une capacité (c) du canal (15).

**13.** Système de communication (11) selon la revendication 12, **caractérisé en ce que** le système de communication (11) est conçu pour mettre en œuvre un procédé (41) selon l'une des revendications 1 à 11.

**14.** Système de communication (11) selon l'une des revendications 12 et 13, **caractérisé en ce qu'**au moins un nœud (13) comporte le dispositif de mesure (23).

**15.** Système de communication (11) selon l'une des revendications 12 à 14, **caractérisé en ce que** le dispositif de mesure (23) est intégré dans un contrôleur de communication (21) du nœud (13).

**16.** Système de communication (11) selon l'une des revendications 12 à 15, **caractérisé en ce que** le dispositif de mesure (23) est réalisé sous la forme d'un composant séparé, de préférence sous la forme d'un ASIC.

# Fig. 1

# Fig. 2

# Fig. 3

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03067804 A
- US 20020083378 A1